# EUROPÄISCHE PATENTSCHRIFT

(11) **EP 1 809 774 B1**
(45) Veröffentlichungstag und Bekanntmachung des Hinweises auf die Patenterteilung: **13.04.2022**
(21) Anmeldenummer: 05809117.4
(22) Anmeldetag: 11.11.2005
(51) Int. Cl.: C21C 5/36, C21C 5/35, C21C 5/00, C21C 1/02, C21C 1/04

(54) **HERSTELLUNG VON ROSTFREISTAHL DER FERRITISCHEN STAHLGRUPPE AISI 4xx IN EINEM AOD-KONVERTER**
PRODUCTION OF STAINLESS STEEL OF AISI 4XX GRADE FERRITIC STEEL IN AN AOD CONVERTER
PRODUCTION D'ACIER INOXYDABLE FAISANT PARTIE DU GROUPE DES ACIERS FERRITIQUES AISI 4XX DANS UN CONVERTISSEUR AOD

(30) Priorität: 12.11.2004 DE 102004054871; 14.07.2005 DE 102005032929
(43) Veröffentlichungstag der Anmeldung: 25.07.2007
(73) Patentinhaber: SMS group GmbH, 40237 Düsseldorf (DE)
(72) Erfinder: REICHEL, Johann, 40489 Düsseldorf (DE)
(74) Vertreter: Klüppel, Walter
(86) Internationale Anmeldenummer: PCT/EP2005/012081
(87) Internationale Veröffentlichungsnummer: WO 2006/050963

(56) Entgegenhaltungen:
- EP-A- 1 310 573
- GB-A- 1 430 375
- GB-A- 1 503 496
- US-A- 4 512 802
- PATENT ABSTRACTS OF JAPAN Bd. 006, Nr. 135 (C-115), 22. Juli 1982 (1982-07-22) & JP 57 060012 A (SUMITOMO METAL IND LTD), 10. April 1982 (1982-04-10)
- LEMKE S ET AL: "TAILORED SOLUTIONS FOR THE PRODUCTION OF QUALITY STEEL" MPT. METALLURGICAL PLANT AND PLANT AND TECHNOLOGY INTERNATIONAL, VERLAG STAHLEISEN, DUESSELDORF, DE, Bd. 24, Nr. 4, August 2001 (2001-08), Seiten 72-74,76,78,8, XP009010639 ISSN: 0935-7254
- None
- DATABASE INSPEC [Online] THE INSTITUTION OF ELECTRICAL ENGINEERS, STEVENAGE, GB; 1 September 1968 (1968-09-01), MELLEMA J ET AL: "Beta-gamma angular correlation in liquid Ho<166> sources", Database accession no. 496

## Beschreibung

Die Erfindung betrifft ein Verfahren zur Herstellung von Rostfreistahl der ferritischen Stahlgruppe AISI 4xx, insbesondere der Stahlgruppe AISI 430 auf der Grundlage von flüssigem Roheisen und FeCr-Feststoffen.

Die Verwendung eines AOD-Konverters zur Herstellung von Edelstählen ist bereits bekannt. So wird in der WO 02/075003 eine Kontrollmethode beschrieben, basierend auf einer kontinuierlichen Abgasmessung in Kombination mit einem Rechner und einem dynamischen Modell, mit deren Hilfe die erforderlichen Blasraten von Sauerstoff und Inertgas sowie die Stoffzusätze gesteuert werden. Aus der EP 1 310 573 A2 ist ein Verfahren zur Herstellung einer Metallschmelze, insbesondere zum Frischen einer Metallschmelze zur Herstellung von z. B. legiertem rostfreien Stahl oder Edelstahl in einem AOD-Konverter bekannt, wobei das Verfahren auf einer nach einem Prozessmodell ablaufenden und die hüttentechnische Anlage steuernden Rechentechnik fußt, wobei das Prozessmodell das Verhalten für mindestens einen variablen Prozessparameter zwischen einer Ist-Prozessgröße, einer Stellgröße und einer Prozessendgröße beschreibt. An einem Beispiel wird der Prozessablauf für die Herstellung für einen Stahl der Güteklasse AISI 304 beschrieben.

Rostfreistähle der ferritischen Stahlgruppe AISI 4xx werden konventionell prinzipiell aus arteigenem Schrott im EAF hergestellt und später dann im AOD Konverter zusätzlich legiert und entkohlt. Um die Anwendung von Roheisen hier zu nutzen, wird in einem Stahlwerk vorbehandeltes Roheisen mit eingeschmolzenem Schrott und Legierung außerhalb des Ofens in einer Pfanne vermischt und danach in den Konverter chargiert.
Ausgehend von der JP 57060012,
aus der ein Verfahren bekannt, ist mit der Vorbehandlung des flüssigen Roheisens mit einer Behandlung zur Entfernung von Phosphor (und Silizium), Schwefel und Kohlenstoff;
Beschickung des AOD-Konverters mit flüssigem Roheisen;
Aufheizen des zugeführten Roheisens durch FeSi-Zugabe;
Einblasen von Ar+O2 zur Veredelung des Metalls sowie weitere Nachbehandlungen unter Einblasen von reinem Argon und Zugabe von FeSi zur Chromrückgewinnung und Entschwefelung;
Abschlacken der Schmelze und O2-Blasen;
weitere Nachbehandlung in einem DH-Gefäß
besteht die Aufgabe der Erfindung darin, zur Herstellung von Rostfreistahl der ferritischen Stahlgruppe AISI 4xx, insbesondere der Stahlgruppe AISI 430 die bekannte AOD-Technologie zum Direktchargieren des Roheisens und des Nachlegierens im Konverter zu nutzen.

Die gestellte Aufgabe zur Herstellung von Rostfreistahl der genannten Stahlgüte wird gelöst mit den Merkmalen des Anspruchs 1 mit den hintereinander durchgeführten Verfahrensschritten:
Verfahren zur Herstellung von Rostfreistahl der ferritischen Stahlgruppe AISI 4xx, insbesondere der Stahlgruppe AISI 430 auf der Grundlage von flüssigem Roheisen und FeCr-Feststoffen, wobei nach einer Vorbehandlung
   im Hochofen (1) und einer DDD-Behandlung das schlackefreie flüssige Roheisen in einem AOD-Konverter (4) aufgeheizt, veredelt bzw. legiert, reduziert und
   abschließend eine Anpassung/Einstellung der behandelten Stahlschmelze in der Gießpfanne (5) durchgeführt wird, dadurch gekennzeichnet,
dass
   - die DDD-Behandlung bei einer extrem niedrigen Temperatur von ca. 1150 °C in einer entsprechend ausgebildeten metallurgischen Vorrichtung (2) durchgeführt wird,
   - dem AOD-Konverter schlackenbildende Materialien zugeführt werden,
   - die behandelte und aufgeheizte Schmelze in den AOD-Konverter eingebracht wird,
   - im AOD-Konverter (4) die nachfolgenden Verfahrensschritte Erhitzen, Veredlung/Legierung durch Zugabe von Rücklaufschrott, Kühlschrott und FeCr60 und Reduktion des flüssigen Roheisens mit hohen Blasraten von Seitendüsen und einer oberen Blaslanze durchgeführt wird,
      - nach dem Aufheizen und der daran anschließenden Entschlackung zur Veredlung der Metallschmelze auf die Metallschmelze Sauerstoff über
         die obere Blaslanze und in die Metallschmelze eine Mischung von Sauerstoff und Inertgas (Argon oder Stickstoff) durch die Seitendüsen geblasen wird, beginnend mit einer sauerstoffreichen Mischung, dessen Verhältnis von Sauerstoff und Inertgas sich während des Blasprozesses ändert und mit einer ständigen Aufteilung der Gesamtsauerstoffmenge während des Blasvorganges zwischen der oberen Blaslanze und den Seitendüsen.
Die an sich bekannte AOD-Technologie wird nach der Erfindung bei der Veredelung von Kohlenstoff-Flüssigstahl für die Herstellung wärme- und säurebeständiger Stahl- und Edelstahlsorten mit einem hohen Chromanteil eingesetzt. Das Verfahren kommt zur Ausführung, indem Sauerstoff und Inertgas (reaktionsträges Gas) zusammen durch Düsen in das Bad und zusätzlich Sauerstoff und Intergas mit einer Blaslanze von oben auf die Oberfläche des Bades geblasen werden. Das Ziel der Behandlung besteht darin, innerhalb eines optimalen Zeitraumes eine Schmelzcharge zu beenden, die beabsichtigte Abstichtemperatur und Zusammensetzung zu erreichen und die Chromverluste zu minimieren. Das erfindungsgemäße metallurgische Verfahren ermöglicht mit dem Verfahrensmodell die Behandlung einer Charge in der AOD-Anlage. Hierbei beobachtet, prognostiziert und steuert das metallurgische Verfahrensmodell die Behandlung, um die Schmelze/Charge mit den angestrebten Anforderungen zu beenden. Die angewandte Technologie und das Verfahrensmodell kalkulieren die Sollwerte für die Steuerung des eingeblasenen Sauerstoffes und die Materialzusätze entsprechend den Zielwerten der Stahlzusammensetzung und der Stahltemperatur, wobei die Berechnung auf dem laufenden Prozesszustand unter Berücksichtigung der vorher durch die praktischen Produktionsdaten definierten Restriktionen und Regeln beruhen.

Auf der Grundlage eines vorher durch die praktischen Produktionsdaten definierten Blasmusters und durch den für die Entkohlung und die Elementoxidation benötigten Sauerstoffbedarf werden dabei die Strömungsgeschwindigkeit und die Mischung des durch die unter der Oberfläche angeordneten Düsen und durch eine Blaslanze von oben in das Bad einzublasenden Prozessgases (Sauerstoff und Argon/Stickstoff) gesteuert und der Umschaltpunkt von Stickstoff auf Argon zur Erreichung des zulässigen Bereiches an Stickstoff im Stahl bestimmt.

Weiterhin bestimmt das metallurgische Verfahrensmodell die Menge an Schlackebildnern, Kühlschrott und Legierungen sowie den Ausgangspunkt für den Zusatz von Legierungen und die Beschickungsrate für den Legierungszusatz. Nachfolgend wird die erfindungsgemäße Herstellung von Rostfreistahl der Stahlgruppe AISI 4xx, insbesondere der Stahlgruppe AISI 430 näher beschrieben. Die AISI 4xx-Technologie mit einer DDD-Verfahrenslinie und dem AOD-Konverter auf der Grundlage von flüssigem Roheisen und FeCr-Feststoffen ist in drei Hauptschritte unterteilt, nämlich
* die Vorbehandlung des flüssigen Roheisens im Hochofen,
* die Erwärmung, Veredelung und Legierung des flüssigen Roheisens im AOD-Konverter und
* die abschließende Anpassung/Einstellung in der Schmelzstation.

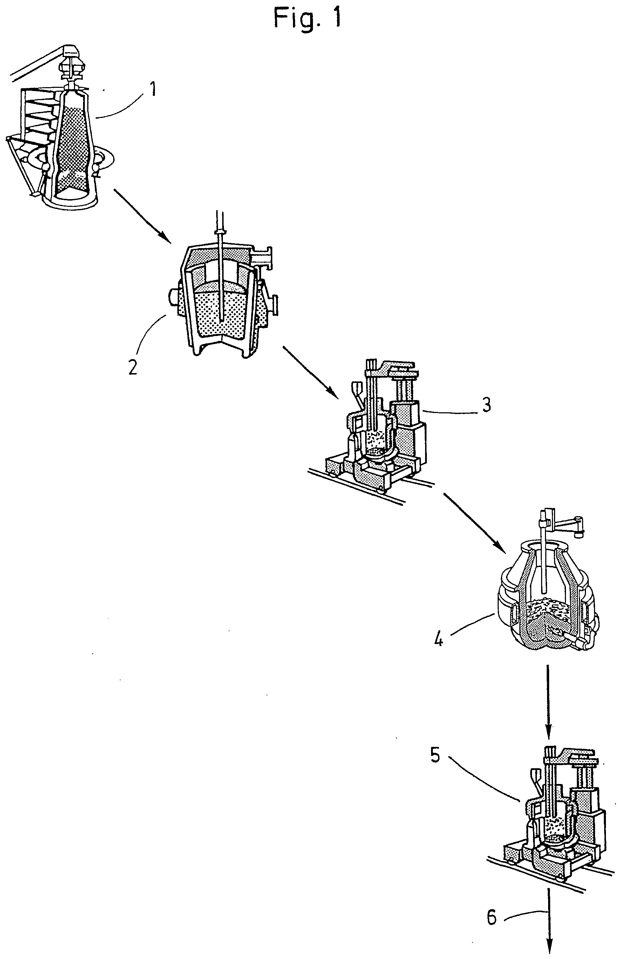

In der Figur 1 ist eine beispielhafte Verfahrenslinie für die Herstellung von Edelstahl AISI 430 dargestellt. Das flüssige Roheisen wird zunächst nach seinem Austritt aus dem Hochofen 1 einer DDD-Behandlung (Dephosphorization, Desiliconization, Desulphurization) in einer entsprechend ausgebildeten metallurgischen Vorrichtung 2 unterzogen. Anschließend kann in einem Pfannenofen 3 eine Vorheizung des flüssigen Roheisens erfolgen. Danach wird die behandelte und aufgeheizte Schmelze in den AOD-Konverter 4 eingebracht. Hier erfolgt unter Zugabe von Rücklaufschrott, Kühlschrott und FeCr 60 die Veredelung und Legierung des flüssigen Roheisens. Nach der Behandlung im AOD-Konverter gelangt die Stahlschmelze zur abschließenden Anpassung/Einstellung in die Gießpfanne 5 und abschließend dann zur Gießmaschine 6 (die Gießmaschine selbst ist hier nicht dargestellt).

Vor der Beschickung mit flüssigem Roheisen werden dem AOD-Konverter 4 schlackenbildende Materialien, wie Kalk und Dolomit zugeführt, um den richtigen Basengehalt der Schlacke abzusichern. Nach der Beschickung mit schlackefreiem flüssigen Roheisen aus der DDD-Vorrichtung 2 bzw. Pfannenofen 3 wird der AOD-Konverter 4 in die Probenahmestellung gekippt, wo eine Temperaturmessung erfolgt. Danach wird der AOD-Konverter 4 in die aufrechte Stellung zurückgefahren und abhängig von der Temperatur weiter der exothermischen Behandlung unterstellt. Die Erhöhung der Temperatur wird durch Zugaben von FeSi und/oder Aluminium erreicht.

Nachfolgend wird das erfindungsgemäße Verfahren mit einer Behandlung der Stahlschmelze in einem AOD-Konverter 4 beschrieben. Der Prozess im AOD-Konverter 4 ist in drei Hauptschritte unterteilt, nämlich a) Erhitzen des flüssigen Metalls, b) Veredelung und c) Reduktion.

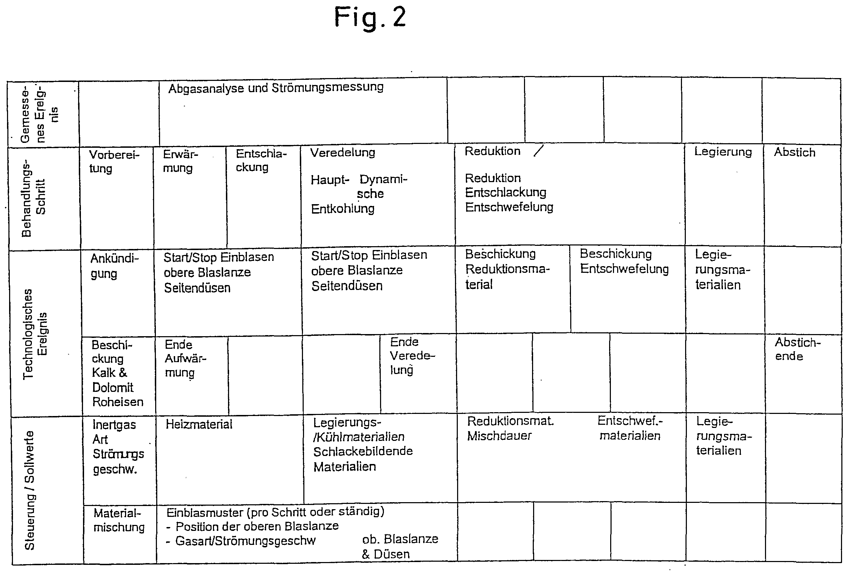

In der Figur 2 ist die Reihenfolge dieser Verfahrensschritte zusammenfassend aufgeführt. Sie enthält insbesondere die gemessenen und technologischen Ereignisse, die durchgeführten Behandlungsschritte, die vorgegebenen Sollwerte sowie die Steuerung der einzelnen Teilschritte.

Die Erhitzung des Flüssigmetalls im AOD-Konverter 4 erfolgt im Allgemeinen durch Silizium. Die hohen exothermen Eigenschaften dieses Elements bei der Reaktion mit Sauerstoff ermöglichen es, schnell die Zieltemperatur mit hoher Genauigkeit zu erreichen. Die Reaktion verläuft wie folgt:

(Si) + 2(O) = (SiO₂) mit einer Enthalpie von 1 kg Si = 6,44 kWh

Als Alternative dazu kann auch Aluminium wie folgt verwendet werden:

2(Al) + 3(O) = (Al₂O₃) mit einer Enthalpie von 1 kg AI = 7,36 kWh

Je nach weiteren Beigaben legierungsbildender Materialien muss die Zieltemperatur der Erwärmung von der weiteren Energiezuführung abhängen, die sich aus dem Entkohlungs- und Metalloxidationsprozess mit allen während der Behandlung einhergehenden Energieverlusten ergibt.

Das Verhalten während dieses Behandlungsschrittes ist ähnlich dem während des ersten Blasschrittes im BOF-Prozess. Die Parameter, die während dieses Schrittes über die Qualität der Schaumbildung und über das Schlackeauslaufen entscheiden, sind ein hoher Kohleanteil, die Schlackebildner, die hohe Sauerstoffeinblasrate und die Entfernung der Blaslanze.

Eine richtig gewählte Entfernung der Blaslanze und die Intensität, mit der Sauerstoff aus der oberen Blaslanze eingeblasen wird (Blasrate), verhindern das Austreten von Schlacke und sichern den optimalen Ablauf der Erwärmung.

Der Wärmekreislauf wird wie folgt berechnet: Benötigter Energieinput = Energieinput aus der Si/Al-Oxidation - (Kühlenergie der schlackeformenden Materialien + Energieverluste).

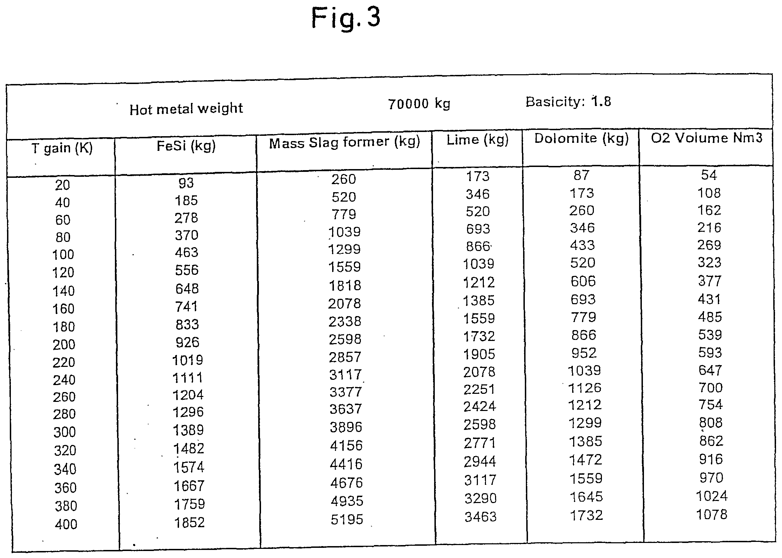

In der Figur 3 sind beispielhaft die benötigten Heizparameter für Roheisen mit einem Chargengewicht von 70 000 kg und einem Basengehalt von 1,8 auf der Grundlage der thermischen Bedingungen eines Konverters aufgeführt.

Nach dem Verfahrensschritt des Erhitzens wird der AOD-Konverter 4 gekippt und das Metall entschlackt. Diese Vorgehensweise ist für eine effiziente Veredelung des Metalls notwendig. Große Mengen an Schlacke verhindern nämlich die starke Auswirkung des eingeblasenen Sauerstoffs und das Entgasen des Stahls von Reaktionsgas. Beim Entschlacken wird die Stahltemperatur gemessen und eine Probe des Metalls wird entnommen.

Die nachfolgende Veredelung des Metalls erfolgt, indem der Sauerstoff über die obere Blaslanze auf das Metall und eine Mischung aus Sauerstoff und Inertgas (Argon oder Stickstoff) durch Seitendüsen in die Charge geblasen wird. Das Verhältnis zwischen dem Sauerstoff und dem Inertgas ändert sich während des Blasprozesses, beginnend mit einer sauerstoffreichen Mischung.

Diese Verfahrenstechnologie sichert die Erzielung eines geringen Kohlenstoffanteils, der günstig als Startbedingung für die danach einsetzende AOD-Behandlung mit einer minimalen Chrom-Oxidation ist. Alternativ kann das VOD-Verfahren (Vacuum Oxygen Decarburization) in der s. g. TRIPLEX-Technologie eingesetzt werden.

Während des Blasvorganges wird die Gesamtsauerstoffmenge ständig zwischen der oben befindlichen Blaslanze und den Seitendüsen aufgeteilt. Nach dem Arbeitsschritt der Veredelung wird die Behandlung mit der Schlackenreduzierung fortgesetzt, wobei beispielsweise auch eine Chromrückgewinnung aus der Schlacke vorgenommen wird. Durch die Zugabe von siliziumhaltigem Material, wie FeSi oder Aluminium, in das flüssige Metall und durch gutes Umrühren erreicht das Metall die gewünschte endgültige oder quasichemische Zusammensetzung, wobei allerdings noch Schwefel enthalten ist.

Auf Grund der der hohen Schwefel-Konzentration sowohl in den Legierungsmitteln als auch in den Schlackenbildnern muss die Behandlung des Edelstahls mit einem separaten Entschwefelungsschritt abgeschlossen werden. Die Effizienz dieser Behandlung hängt maßgeblich von einer hohen Desoxidationsgüte des flüssigen Metalls ab, die durch eine Zugabe von Aluminium erreicht wird. Nach der Behandlung erfolgt der Abstich der Charge zusammen mit einer Restmenge an Schlacke in die Gießpfanne 5.

Der Stahlveredelungsprozess wird erfindungsgemäß durch ein metallurgisches AOD-Modell geplant, überwacht, prognostiziert und gesteuert, um die Schmelze bzw. Charge in der geplanten Zusammensetzung und Temperatur herzustellen. Die wesentlichen Vorteile, die das AOD-Modell mit sich bringt, sind hierbei:
* Die Berechnung der Charge erlaubt die kostenoptimierte Auswahl der Legierungen und des Schrotts,
* die Steuerung der Zieltemperatur,
* die Erzielung einer hohen Leistung durch Prozesssteuerung und
* eine Minimierung der Reduktionsstoffe.

Während der Behandlung wird der aktuelle Zustand der Schmelze/Charge durch die verfügbaren zyklischen und Ereigniseingangsdaten beobachtet, die durch das zu Grunde liegende automatische System übermittelt werden.

Bei Materialzugaben wird ihr Einfluss auf das Gewicht und die Zusammensetzung des Stahls und der Schlacke sowie auf die Stahltemperatur unter Berücksichtigung der material- und elementspezifischen Wirkungsfaktoren in Betracht gezogen. Die aktuellen Stahl- und Schlackezusammensetzungen werden unter Berücksichtigung der Zugaben und Verluste bei jedem Element und jedem Schlackebestandteil den Laboranalysen und -messungen vom Zeitpunkt der Probenahme an angeglichen.

Die wesentlichen Bestandteile des metallurgischen AOD-Modells sind die Berechnung des Zielmaterials, die Prognoseberechnung und die dynamische Modellberechnung.
* Bei der Berechnung des Zielmaterials wird im Allgemeinen die Zugabe an Materialien für alle möglichen Behandlungsschritte kalkuliert, um die Stahltemperatur und -zusammensetzung zu steuern.
* Bei der Prognosekalkulation wird die Behandlungsstrategie des AOD-Verfahrens berechnet. Das umfasst den gesamten AOD-Prozess mit dem aktuellen Zustand der Charge zu Beginn der Behandlung und endet nach dem Abstich. Entsprechend eines allgemeinen Behandlungszeitraumes wird die gesamte Behandlung einer einzelnen Charge mit allen notwendigen Prozessschritten und Probenahmen in Hinblick auf die gegebenen praktischen Daten geplant.
* Das dynamische Modell berechnet die Kohlenstoff-, Sauerstoff- und Energiebilanz sowie die Sollwerte für die Blasraten der Prozessgase.

Auf Grundlage der Bedingungen zu Beginn der Schmelze werden die Kohlenstoff-, Sauerstoff- und anderen relevanten Badkonzentrationen im flüssigen Stahl und die Temperatur während der Behandlungszeit berechnet.

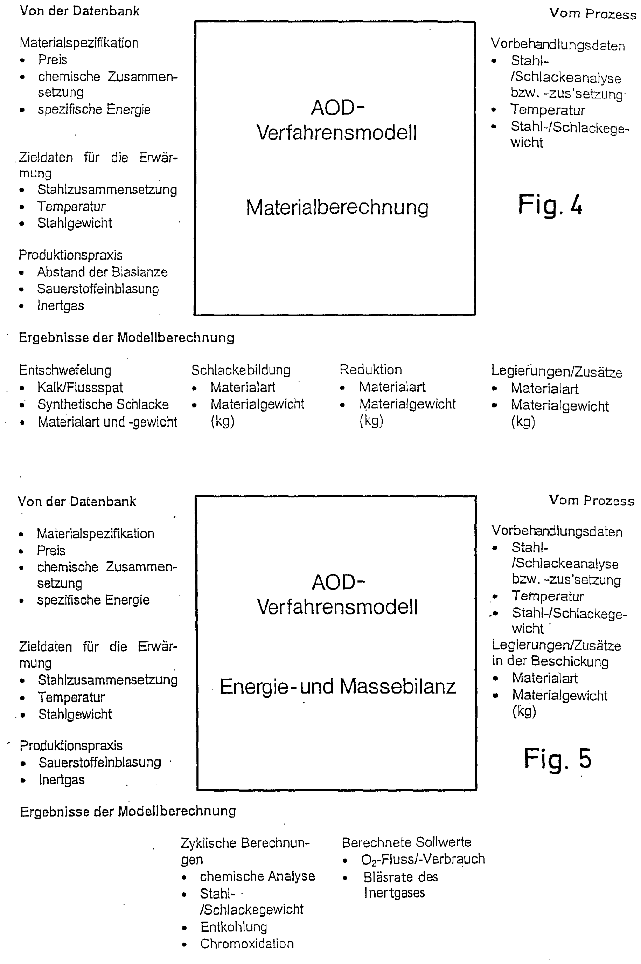

In den Figuren 4 und 5 sind die oben genannten wesentlichen Bestandteile des metallurgischen AOD-Modells zusammenfassend aufgeführt, unterteilt in die Hauptgruppe Materialberechnung (Fig. 4) und Energie- und Massebilanz (Fig. 5). In diesen Abbildungen wurde jeweils aufgetrennt, welche Daten von der Datenbank und welche vom Prozess in dieses Modell einfließen und welche Ergebnisse der Modellberechnung auf dieser Basis erhalten werden.

### Bezugszeichenliste

- 1: Hochofen
- 2: DDD-Vorrichtung
- 3: Pfannenofen
- 4: AOD-Konverter
- 5: Gießpfanne
- 6: Gießmaschine

## Patentansprüche

1. Verfahren zur Herstellung von Rostfreistahl der ferritischen Stahlgruppe AISI 4xx, insbesondere der Stahlgruppe AISI 430 auf der Grundlage von flüssigem Roheisen und FeCr-Feststoffen, wobei nach einer Vorbehandlung im Hochofen (1) und einer DDD-Behandlung das schlackefreie flüssige Roheisen in einem AOD-Konverter (4) aufgeheizt, veredelt bzw. legiert, reduziert und abschließend eine Anpassung/Einstellung der behandelten Stahlschmelze in der Gießpfanne (5) durchgeführt wird, **dadurch gekennzeichnet,**
**dass**
• die DDD-Behandlung bei einer extrem niedrigen Temperatur von ca. 1150 °C in einer entsprechend ausgebildeten metallurgischen Vorrichtung (2) durchgeführt wird,
• dem AOD-Konverter schlackenbildende Materialien zugeführt werden,
• die behandelte und aufgeheizte Schmelze in den AOD-Konverter eingebracht wird,
• im AOD-Konverter (4) die nachfolgenden Verfahrensschritte Erhitzen, Veredlung/Legierung durch Zugabe von Rücklaufschrott, Kühlschrott und FeCr60 und Reduktion des flüssigen Roheisens mit hohen Blasraten von Seitendüsen und einer oberen Blaslanze durchgeführt wird,
• nach dem Aufheizen und der daran anschließenden Entschlackung zur Veredlung der Metallschmelze auf die Metallschmelze Sauerstoff über die obere Blaslanze und in die Metallschmelze eine Mischung von Sauerstoff und Inertgas (Argon oder Stickstoff) durch die Seitendüsen geblasen wird, beginnend mit einer sauerstoffreichen Mischung, dessen Verhältnis von Sauerstoff und Inertgas sich während des Blasprozesses ändert und mit einer ständigen Aufteilung der Gesamtsauerstoffmenge während des Blasvorganges zwischen der oberen Blaslanze und den Seitendüsen.

2. Verfahren nach Anspruch 1, **dadurch gekennzeichnet, dass** auf der Grundlage eines vorher durch praktische Produktionsdaten definierten Blasmusters und durch den für die Entkohlung und die Elementoxidation benötigten Sauerstoffbedarfs die Strömungsgeschwindigkeit und die Mischung des durch die Seitendüsen und durch die obere Blaslanze einzublasenden Prozessgases (Sauerstoff und Argon/Stickstoff) gesteuert und der Umschaltpunkt von Stickstoff auf Argon zur Erreichung des zulässigen Bereiches an Stickstoff im Stahl bestimmt wird:

3. Verfahren nach Anspruch 1, **dadurch gekennzeichnet, dass** der benötigte Energiebedarf für das Aufheizen der Roheisenschmelze nach der Gleichung: benötigter Energiebedarf = Energieinput aus der Si/Al-Oxidation - (Kühlenergie der schlackeformenden Materialien + Energieverluste) berechnet wird.

4. Verfahren nach Anspruch 1,
**dadurch gekennzeichnet,**
**dass** nach der Veredlung der Metallschmelze eine Schlackenreduzierung mit - beispielsweise einer Chromrückgewinnung aus der Schlacke durchgeführt sowie die gewünschte endgültige oder quasichemische Zusammensetzung durch Zugabe von siliziumhaltigem Material wie beispielsweise FeSi und bei Bedarf Aluminium.

5. Verfahren nach Anspruch 4, **dadurch gekennzeichnet, dass** je nach der Güte der gewünschten Stahlgruppe, beispielsweise der
Güte AISI 439, vor dem Abstich der Metallschmelze ein separater Entschwefelungsschritt durchgeführt wird, wobei die Effizienz dieser Behandlung maßgeblich von einer hohen Desoxidationsgüte des flüssigen Metall abhängt und durch eine Zugabe von Aluminium erreicht wird.

## Claims

1. Method of producing stainless steel of the ferritic steel group AISI 4xx, particularly the steel group AISI 430, on the basis of liquid pig iron and FeCr solids, wherein after pretreatment in the blast furnace (1) and a DDD treatment the slag-free liquid pig iron in an AOD converter (4) is heated, refined or alloyed, reduced and finally an adaptation/adjustment of the treated steel melt is carried out in the pouring ladle (5), **characterised in that**
- the DDD treatment is carried out at an extremely low temperature of approximately 1150° C in an appropriately constructed metallurgical device (2),
- slag-forming materials are fed to the AOD converter,
- the treated and heated melt is introduced into the AOD converter,
- the following method steps of heating, refining/alloying by addition of revert scrap, cooling scrap and FeCr60 and reduction of the liquid pig iron at high blowing rates by lateral nozzles and an upper blowing lance are carried out in the AOD converter (4),
- after the heating and the slag removal subsequent thereto, for refining the metal melt oxygen is blown onto the metal melt by way of the upper blowing lance and a mixture of oxygen and inert gas (argon or nitrogen) is blown into the metal melt through the lateral nozzles, beginning with an oxygen-rich mixture, the ratio of oxygen and inert gas of which changes during the blowing process, and with a constant division of the total oxygen quantity during the blowing process between the upper blowing lance and the lateral nozzles.

2. Method according to claim 1, **characterised in that** control of the flow speed and the mixture of the process gas (oxygen and argon/nitrogen), which is to be blown in through the lateral nozzles and through the upper blowing lance, and determination of the changeover point from nitrogen to argon in order to achieve the allowable range of nitrogen in the steel are undertaken on the basis of a blowing pattern, which is defined beforehand by practical production data, and through the oxygen requirement needed for decarburisation and element oxidation.

3. Method according to claim 1, **characterised in that** the energy requirement necessary for heating the pig iron melt is calculated in accordance with the equation:
necessary energy requirement = energy input from the Si/Al oxidation - (cooling energy of the slag-forming materials + energy losses).

4. Method according to claim 1, **characterised in that** after the refinement of the metal melt a slag reduction is carried out with, for example, chromium recovery from the slag as well as the desired definitive or quasi-chemical composition by addition of material containing silicon, such as, for example, FeSi and, if required, aluminium.

5. Method according to claim 4, **characterised in that** depending on the quality of the desired steel group, for example the quality AISI 439, a separate desulphurisation step is carried out prior to tapping of the metal melt, wherein the efficiency of this treatment critically depends on a high deoxidation quality of the liquid metal and is achieved through addition of aluminium.

## Revendications

1. Procédé destiné à la fabrication d'acier inoxydable du groupe d'aciers ferritiques AlSI 4xx, en particulier du groupe d'acier AlSI 430, sur la base de fonte brute liquide et de matières solides à base de FeCr ; dans lequel, après un prétraitement dans le haut-fourneau 1) et après un traitement DDD (déphosphoration, désiliciumisation, désulfuration), on chauffe la fonte brute liquide qui est exempte de laitier dans un convertisseur AOD (4), on la soumet à un affinage, respectivement à un alliage, on la réduit et enfin, dans la poche de coulée (5), on procède à un ajustage/réglage de la masse fondue d'acier qui a été traitée, **caractérisé en ce que** :
- le traitement DDD est mis en oeuvre à une température extrêmement basse d'environ 1150 °C dans un dispositif métallurgique (2) qui a été conçu de manière correspondante ;
- on achemine, au convertisseur AOD, des matières qui forment du laitier ;
- on introduit, dans le convertisseur AOD, la masse fondue qui a été traitée et qui a été chauffée ;
- dans le convertisseur AOD (4), on met en œuvre les étapes opératoires suivantes, à savoir : un chauffage, un affinage/alliage par addition de la ferraille de recyclage, de la ferraille de refroidissement et du ferro-chrome 60 %, et une réduction de la fonte brute liquide avec des vitesses de soufflage élevées à partir de buses latérales et à partir d'une lance de soufflage supérieure ;
- après le chauffage et l'élimination du laitier qui s'ensuit à des fins d'affinage de la masse fondue métallique, on insuffle, sur la masse fondue métallique, de l'oxygène par l'intermédiaire de la lance de soufflage supérieure et dans la masse fondue métallique, un mélange d'oxygène et d'un gaz inerte (argon ou azote) par l'intermédiaire des buses latérales, en commençant avec un mélange riche en oxygène dont le rapport entre l'oxygène et le gaz inerte est modifié au cours du processus de soufflage et avec une répartition constante de la quantité totale d'oxygène au cours du processus de soufflage entre la lance de soufflage supérieure et les buses latérales.

2. Procédé selon la revendication 1, **caractérisé en ce que**, sur la base d'un modèle de soufflage qui a été défini au préalable par l'intermédiaire de données de production pratiques et par la demande en oxygène requise pour la décarburation et l'oxydation des éléments, on règle la vitesse d'écoulement et le mélange du gaz de traitement (oxygène et argon/azote) qui doit être introduit par soufflage par l'intermédiaire des buses latérales et par l'intermédiaire de la lance de soufflage supérieure et on détermine le point de passage par commutation de l'azote à l'argon dans le but d'atteindre la plage admissible d'azote dans l'acier.

3. Procédé selon la revendication 1, **caractérisé en ce que** l'on calcule la demande requise en énergie pour le chauffage de la fonte brute liquide en se référant à l'équation : la demande requise en énergie = l'apport d'énergie à partir de l'oxydation de Si/Al - (l'énergie de refroidissement des matières qui forment du laitier + les pertes en énergie).

4. Procédé selon la revendication 1, **caractérisé en ce que**, après l'affinage de la masse fondue métallique, on procède à une réduction du laitier avec par exemple une récupération du chrome à partir du laitier, et on obtient la composition finale ou quasichimique désirée par l'intermédiaire de l'addition d'une matière qui contient du silicium, comme par exemple du FeSi, et en cas de nécessité, de l'aluminium.

5. Procédé selon la revendication 4, **caractérisé en ce que**, en fonction du produit du groupe d'acier désiré, par exemple du produit AlSI 439, avant la coulée de la masse fondue métallique, on met en oeuvre une étape séparée de désulfuration ; dans lequel l'efficacité de ce traitement dépend, d'une manière déterminante, d'une qualité de désoxydation élevée du métal liquide, et est obtenue par l'intermédiaire d'une addition d'aluminium.
